# EUROPÄISCHE PATENTSCHRIFT

(11) **EP 3 292 444 B1**
(45) Veröffentlichungstag und Bekanntmachung des Hinweises auf die Patenterteilung: **07.04.2021**
(21) Anmeldenummer: 15728839.0
(22) Anmeldetag: 11.06.2015
(51) Int. Cl.: G05B 19/19

(54) **VERFAHREN ZUM BETREIBEN EINES ELEKTRISCHEN ODER FLUIDISCHEN STELLANTRIEBS UND BEWEGUNGSSTEUERUNG FÜR EINEN STELLANTRIEB**
METHOD FOR OPERATING AN ELECTRIC OR FLUIDIC ACTUATOR AND MOVEMENT CONTROLLER FOR AN ACTUATOR
PROCÉDÉ DE FONCTIONNEMENT D'UN MÉCANISME DE COMMANDE ÉLECTRIQUE OU FLUIDIQUE ET COMMANDE DE DÉPLACEMENT D'UN MÉCANISME DE COMMANDE

(43) Veröffentlichungstag der Anmeldung: 14.03.2018
(73) Patentinhaber: Festo SE & Co. KG, 73734 Esslingen (DE)
(72) Erfinder: NITSCHE, Rainer, 73230 Kirchheim (DE)
(74) Vertreter: Patentanwälte Magenbauer & Kollegen Partnerschaft mbB
(86) Internationale Anmeldenummer: PCT/EP2015/063047
(87) Internationale Veröffentlichungsnummer: WO 2016/198109

(56) Entgegenhaltungen:
- EP-A1- 1 785 792
- EP-A1- 2 386 774
- EP-A2- 1 437 637
- DE-A1-102008 052 255
- US-A- 4 707 780
- US-A- 5 656 903
- US-A1- 2008 258 671

## Beschreibung

Die Erfindung betrifft ein Verfahren zum Betreiben eines elektrischen oder fluidischen Stellantriebs, dem eine Sollposition, insbesondere von einer übergeordneten Steuerungseinrichtung, vorgegeben wird, mit den Schritten: Bereitstellen der Sollposition, insbesondere von einer übergeordneten Steuerungseinrichtung, an eine Bahnplanungseinheit und Berechnen von Bewegungswerten aus der Sollposition, Bereitstellen der Bewegungswerte von der Bahnplanungseinheit an ein Steuermittel und an ein Regelmittel, Berechnen eines von den Bewegungswerten abhängigen ersten Stellgrößenanteils im Steuermittel und Berechnen eines von den Bewegungswerten und von Positionssignalen eines dem Stellantrieb zugeordneten Positionssensors abhängigen zweiten Stellgrößenanteils im Regelmittel, Zusammenführen des ersten und des zweiten Stellgrößenanteils in einer Steuereinheit und Bereitstellen eines aus den Stellgrößenanteilen resultierenden Steuersignals an den Stellantrieb. Ferner betrifft die Erfindung eine Bewegungssteuerung für einen Stellantrieb.

Ein derartiges Verfahren sowie eine derartige Bewegungssteuerung zielen darauf ab, mit einem möglichst geringen Rechenaufwand eine qualitativ hochwertige Regelung eines Stellantriebs zu ermöglichen. Dabei wird davon ausgegangen, dass die Sollposition wahlweise über einen Kommunikationsbus von einer übergeordneten Steuerungseinrichtung, bei der es sich beispielsweise um eine speicherprogrammierbare Steuerung (SPS) handeln kann, oder von einem lokalen Eingabegerät bereitgestellt wird. Die Sollposition wird, insbesondere in Form eines digital codierten Signals oder eines elektrischen Strom- und/oder Spannungspegels an eine Bahnplanungseinheit bereitgestellt. Dort findet eine Berechnung von Bewegungswerten anhand der Sollposition, gegebenenfalls auch unter Einbeziehung einer Istposition des Stellantriebs, statt. Die Bahnplanungseinheit stellt einen oder mehrere Bewegungswerte, beispielsweise einen Stellweg und/oder eine Stellgeschwindigkeit und/oder eine Stellbeschleunigung und/oder einen Stellruck sowohl an ein Steuermittel als auch an ein Regelmittel bereit. Im Steuermittel erfolgt eine Berechnung eines von den Bewegungswerten abhängigen ersten Stellgrößenanteils. Im Regelmittel erfolgt eine Berechnung eines von den Bewegungswerten und von Positionssignalen eines dem Stellantrieb zugeordneten Positionssensors abhängigen zweiten Stellgrößenanteils. Die berechneten Stellgrößenanteile werden dann in einer Steuereinheit zusammengeführt und von dort aus als Steuersignal an den Stellantrieb bereitgestellt.

Aus der DE 10 2008 052 255 A1 ist ein Verfahren zum Ansteuern eines Aktuators für ein Ventil einer Brennkraftmaschine mit den folgenden Schritten bekannt: Ermittlung einer Sollkraft für den Aktuator anhand eines Zylinderinnendrucks und eines Drucks im Saugrohr und/oder eines Abgasgegendrucks, wobei aus einem Kurbelwinkel in einem Sollwertgenerator wenigstens eine Soll-Zustandsgröße über die Zeit bestimmt wird und aus der Soll-Zustandsgröße in einer Flachheitsbasierte-Vorsteuerung eine Sollkraft des Aktuators bestimmt und mit einem Istwert der entsprechenden Zustandsgröße verglichen und eine vektorielle Differenz bestimmt und daraus in einem erweiterten Zustandsregler eine Sollkraft des Aktuators bestimmt; wobei eine Adaption der Sollkraft aus in mehreren Schritten bestimmten vektoriellen Differenzen wird und die Sollkräfte zu einer Summenkraft addiert werden und aus der Summenkraft mittels wenigstens einer Kennlinie und/oder wenigstens einem Kennfeld als Funktion eines aktuellen und prädizierten Ventilhubes ein Soll-Wert für wenigstens einen Ansteuerstrom des Aktuators bestimmt wird.

Die Aufgabe der Erfindung besteht darin, ein Verfahren zum betreiben eines elektrischen oder fluidischen Stellantriebs und eine Bewegungssteuerung für einen Stellantrieb bereitzustellen, die eine einfache Funktionsdiagnose ermöglichen. Diese Aufgabe wird für ein Verfahren der eingangs genannten Art mit den Merkmalen des Anspruchs 1 gelöst. Hierbei ist vorgesehen, dass ein Überwachungsmittel eine Überwachung wenigstens eines Stellgrößenanteils vornimmt und ein Fehlersignal bereitstellt, wenn der überwachte Stellgrößenanteil einen vorgebbaren Schwellenanteil am Steuersignal überschreitet. Bei geeigneter Auslegung des Steuermittels und des Regelmittels stellt sich bei regulären Betriebszuständen des Stellantriebs ein, insbesondere vorgebbarer, Stellgrößenanteil des Regelmittels ein, der einen vorgegebenen Maximalwert nicht überschreiten soll.

Dabei sollen unter regulären Betriebszuständen diejenigen Betriebszustände verstanden werden, die ohne Vorhandensein eines mechanischen und/oder elektrischen und/oder fluidischen Fehlers auftreten können und die vorzugsweise sämtliche Stellungen und sämtliche zugelassenen Geschwindigkeiten und sämtliche zugelassenen Beschleunigungen des Stellantriebs umfassen. Grundsätzlich kann davon ausgegangen werden, dass bei regulären Betriebszuständen des

Stellantriebs der Stellgrößenanteil des Steuermittels erheblich größer ist als der Stellgrößenanteil des Regelmittels. Exemplarisch kann angenommen werden, dass bei regulären Betriebszuständen des Stellantriebs der Stellgrößenanteil des Regelmittels weniger als 20 Prozent beträgt, im Idealfall im Bereich von weniger als 5 Prozent. Demgegenüber stellt sich bei Auftreten wenigstens eines mechanischen und/oder elektrischen und/oder fluidischen Fehlers am Stellantrieb ein verändertes Verhältnis der beiden Stellgrößenanteile des Steuermittel und des Regelmittels ein. Dies ist darauf zurückzuführen, dass aufgrund des aufgetretenen Fehlers der Stellantrieb nicht mehr in gleicher Weise den bereitgestellten Steuersignalen Folge leisten kann, wie dies ohne auftreten des Fehlers der Fall ist. Dementsprechend muss zum Erreichen der durch den bereitgestellten Sollwert repräsentierten Sollposition für den Stellantrieb eine Nachregelung der Bewegung des Stellantriebs vorgenommen werden. Dies resultiert in einer Zunahme des Stellgrößenanteils des Regelmittels, was mit Hilfe des Überwachungsmittels festgestellt werden kann und was bei Überschreiten eines vorgebbaren Schwellenanteils zur Ausgabe eines Fehlersignals führt. Dieses Fehlersignal kann beispielsweise in einer dem Stellantrieb zugeordneten Bewegungssteuerung, in der vorzugsweise auch das Verfahren abläuft, zur Ausgabe einer Benutzerinformation, beispielsweise in Form eines Lichtsignals und/oder Schaltsignals führen. Ergänzend oder alternativ kann vorgesehen sein, dass die Bewegungssteuerung ein geeignetes elektrisches Signal an eine übergeordnete Steuerungseinrichtung, insbesondere eine speicherprogrammierbare Steuerung oder einem Leitsystem, bereitstellt. Jedenfalls kann durch Vergleich der ersten und zweiten Stellgrößenanteile eine einfache Aussage darüber getroffen werden, ob der Stellantrieb noch ordnungsgemäß funktioniert oder ob Fehler auftreten. Typischerweise findet vor dem Vergleich der beiden Stellgrößenanteile eine Filterung oder sonstige Vorverarbeitung wenigstens eines der Stellgrößenanteile, insbesondere des zweiten Stellgrößenanteils statt, insbesondere um hochfrequente Signalanteile zu eliminieren. Der Vergleich der Stellgrößenanteile ist insbesondere im Hinblick auf eine vorbeugende Wartung von Interesse, da beispielsweise bei längerfristiger Betrachtung der Stellgrößenanteile schleichende Veränderungen im Regelverhalten erkannt werden können. Aus der Art und dem auftreten dieser Veränderungen können Rückschlüsse auf möglicherweise vorliegende Verschleißvorgänge im Stellantrieb gezogen werden, anhand derer wahlweise eine vorbeugende und/oder bedarfsgerechte Wartung oder gegebenenfalls ein Austausch des Stellantriebs zu einem günstigen Zeitpunkt vorgenommen werden kann, ohne massive Beeinträchtigungen einer Gesamtanlage, in der der Stellantrieb integriert ist, in Kauf nehmen zu müssen.

Vorteilhafte Weiterbildungen der Erfindung sind Gegenstand der Unteransprüche.

Zweckmäßig ist es, wenn in der Bahnplanungseinheit eine Überprüfung der bereitgestellten Sollposition auf Konflikte mit vorgebbaren Bewegungsbeschränkungen und/oder Stellgrößenbeschränkungen vorgenommen wird, bevor die Berechnung der Bewegungswerte erfolgt. Bei der Berechnung der Bewegungswerte, die in der Bahnplanungseinheit vorgenommen wird, werden vorgebbare Randbedingungen wie beispielsweise Bewegungsbeschränkungen, die beispielsweise durch mechanische Ausschlagbegrenzungen des Stellantriebs vorgegeben sein können, und/oder Stellgrößenbeschränkungen wie beispielsweise eine maximale Stellgeschwindigkeit für den Stellantrieb mit berücksichtigt. Durch die Berücksichtigung derartiger Randbedingungen kann beispielsweise eine Überlastung des Stellantriebs vermieden werden. Ferner kann ebenfalls vermieden werden, dass ein Stellgrößenanteil des Regelmittels auch ohne Vorliegen eines Fehlers allein deswegen ansteigt, weil der Stellantrieb aus technischen Gründen nicht in der Weise dem Steuersignal erfolgen kann, wie dies vorgegeben ist.

Bei einer vorteilhaften Weiterbildung der Erfindung ist vorgesehen, dass in dem Steuermittel eine Berechnung des ersten Stellgrößenanteils mit einem inversen Modell der Regelstrecke vorgenommen wird. Dabei umfasst das inverse Modell der Regelstrecke sämtliche Parameter, die für eine möglichst präzise Beschreibung des Verhaltens des Stellantriebs im Rahmen einer gewünschten oder notwendigen Genauigkeit des Modells erforderlich sind. Durch die algebraische Struktur des inversen Modells, das auch als inverses System bezeichnet wird, im Steuermittel kann aus dem oder den von der Bahnplanungseinheit bereitgestellten Bewegungswerten mit verhältnismäßig geringen Rechenaufwand der erste Stellgrößenanteil berechnet werden. Vorteilhaft hierbei ist insbesondere, dass die Berechnung des ersten Stellgrößenanteils aus dem oder den Bewegungswerten keine Integration von Differenzialgleichungen erfordert, wodurch die vom Steuermittel benötigte Rechenleistung gering gehalten werden kann.

Bevorzugt ist vorgesehen, dass in dem inversen Modell der Regelstrecke mehrere Modellparameter eines mit dem Stellantrieb bewegungsgekoppelten Fluidventils aus der Gruppe: Fluidmassenstrom, Fluiddruck, Ventilkörper-Rückstellkraft, berücksichtigt werden. Diese Modellparameter ermöglichen es, die vom Stellantrieb angetriebene Komponente, bei der es sich insbesondere um einen Fluidventil handeln kann, bei der Ermittlung der Stellgrößenanteile möglichst realitätsnah mit zu berücksichtigen und dadurch das Regelverhalten für den Stellantrieb zu verbessern. Ferner wird durch diese Einbeziehung der vom Stellantrieb angetriebenen Komponente auch eine Mitberücksichtigung und insbesondere Identifizierung von Fehlern dieser Komponente ermöglicht. Dementsprechend enthält das inverse Modell der Regelstrecke somit vorzugsweise sowohl die Modellparameter des Stellantriebs als auch die Modellparameter der vom Stellantrieb angetriebenen Komponente, insbesondere des Fluidventils.

Vorteilhaft ist es, wenn im Regelmittel zusätzlich zur Berechnung des zweiten Stellgrößenanteils eine Berechnung eines Reglerfehlerwerts mit einem Fehlermodell vorgenommen wird und/oder dass in dem Steuermittel zusätzlich zur Berechnung des ersten Stellgrößenanteils mit dem inversen Modell der Regelstrecke eine Berechnung eines Steuerfehlerwerts mit einem inversen Fehlermodell vorgenommen wird. Dabei kann vorgesehen sein, dass im Regelmittel und/oder im Steuermittel eines oder mehrere Fehlermodelle bzw. inverse Fehlermodelle enthalten sind, die jeweils auf die Identifizierung bestimmter Fehler optimiert sind und eine besonders frühzeitige Erkennung dieser bestimmten Fehler ermöglichen. Dies ist insbesondere dann von Interesse, wenn möglicherweise auftretende Fehler sich in schwerwiegender Weise auf die Funktion des Stellantriebs und/oder der vom Stellantrieb angetriebenen Komponente auswirken könnten, jedoch in den ersten und zweiten Stellgrößenanteilen nur einen geringen Niederschlag finden und/oder zu einem sehr späten Zeitpunkt erkennbar sind. Der vom Fehlermodell im Regelmittel ausgegebene Reglerfehlerwert und/oder der vom Fehlermodell im Steuermittel ausgegebene Steuerfehlerwert können insbesondere dem Überwachungsmittel zugeführt werden, um dort mit vorgegebenen Schwellwerten verglichen zu werden und bei Schwellwertüberschreitung als Fehlersignal ausgegeben werden.

In weiterer Ausgestaltung der Erfindung ist vorgesehen, dass das Überwachungsmittel eine Überwachung des zweiten Stellgrößenanteils vornimmt und dass das Überwachungsmittel das Fehlersignal bereitstellt, wenn die Überschreitung des vorgebbaren Schwellenanteils am Steuersignal durch den zweiten Stellgrößenanteil länger als eine vorgebbare Zeitspanne andauert oder ein Integral über dem zweiten Stellgrößenanteil einen vorgebbaren Wert überschreitet. Um unnötige Fehlermeldungen zu vermeiden ist vorgesehen, ein Fehlersignal erst dann auszusenden, wenn die Überschreitung des vorgebbaren Schwellenanteils am Steuersignal länger als eine vorgebbare Zeitspanne andauert oder wenn oder ein Integral über dem zweiten Stellgrößenanteil einen vorgebbaren Wert überschreitet. Beispielsweise können unterschiedliche Zeitbedingungen zugrundegelegt werden, insbesondere kann vorgesehen sein, dass nur dann ein Fehlersignal ausgegeben wird, wenn die Überschreitung des vorgebbaren Schwellenanteils in einem zusammenhängenden zeitlichen Intervall vorliegt. Alternativ kann vorgesehen werden, dass ein Fehlersignal aus gesendet wird, wenn eine Überschreitung des vorgebbaren Schwellenanteils in mehreren, durch zeitliche Lücken voneinander getrennten Zeitabschnitten erfolgt ist, die jedoch in Summe eine vorgebbare Zeitdauer überschreiten. Insbesondere kann vorgesehen sein, ein Integral über dem zweiten Stellgrößenanteil zu bilden, wobei eine Überschreitung eines vorgebbaren Integralwerts zur Ausgabe des Fehlersignals führt.

Zweckmäßig ist es, wenn das Steuermittel den ersten Stellgrößenanteil mit einer flachheitsbasierten Vorsteuerung berechnet und dass das Regelmittel anhand des Sensorsignals eine Anpassung des Steuersignals an die bereitgestellten Bewegungswerte mit dem zweiten Stellgrößenanteil durchführt.

Bei einer vorteilhaften Weiterbildung der Erfindung ist vorgesehen, dass auch bei Vorliegen einer Überschreitung des vorgebbaren Schwellenanteils am Steuersignal durch den zweiten Stellgrößenanteil, insbesondere länger als eine vorgebbare Zeitspanne oder bei Überschreitung eines vorgebbaren Integralwerts, eine fortdauernde Ansteuerung des Stellantriebs durchgeführt wird. Hier liegt ein bedeutender Vorteil der kombinierten Ansteuerung des Stellantriebs mit den beiden Stellgrößenanteilen, die auf das Steuermittel und das Regelmittel zurückgehen. Solange der aufgetretene Fehler am Stellantrieb oder an der vom Stellantrieb angetriebenen Komponente nicht zu einem vollständigen Versagen führt, ermöglicht das Verfahren einen Weiterbetrieb, gegebenenfalls mit verringerter Leistungsfähigkeit bzw. Dynamik der Regelung, des Stellantriebs und der angetriebenen Komponente bei gleichzeitiger Aussendung des Sensorsignals, um entsprechende Maßnahmen ergreifen zu können, mit denen der Fehler behoben werden kann.

Die Aufgabe der Erfindung wird auch durch eine Bewegungssteuerung für einen Stellantrieb gelöst, wie sie im Anspruch 9 angegeben ist. Dabei umfasst die Bewegungssteuerung eine Eingangsschnittstelle, die für einen Empfang einer Sollposition, insbesondere von einer übergeordneten Steuerungseinrichtung, ausgebildet ist, eine Antriebsschnittstelle, die für eine Bereitstellung eines Energieflusses an einen Stellantrieb und für einen Empfang eines dem Stellantrieb zugeordneten Positionssensors ausgebildet ist, eine Recheneinheit, die für eine Verarbeitung der Sollposition in ein Steuersignal ausgebildet ist und eine Endstufenanordnung, die für eine Bereitstellung des Energieflusses an die Antriebsschnittstelle in Abhängigkeit von dem Steuersignal ausgebildet ist, wobei vorgesehen ist, dass die Recheneinheit für die Durchführung des Verfahrens nach einem der Ansprüche 1 bis 8 eingerichtet ist.

Bei einer vorteilhaften Weiterbildung der Bewegungssteuerung ist vorgesehen, dass die Recheneinheit die Bahnplanungseinheit, das Steuermittel, das Regelmittel, das Überwachungsmittel und die Steuereinheit als Softwaremodule enthält. Exemplarisch ist vorgesehen, dass die Recheneinheit als Mikroprozessor oder Microcontroller ausgebildet ist und zumindest einen Speicherbereich aufweist, in den Softwaremodule eingespeichert werden können, mit denen das Verfahren nach einem der Ansprüche 1 bis 8 durchgeführt werden kann.

In weiterer Ausgestaltung der Bewegungssteuerung ist vorgesehen, dass die Recheneinheit die Bahnplanungseinheit, das Steuermittel, das Regelmittel, das Überwachungsmittel und die Steuereinheit als Bestandteile einer elektronischen, insbesondere integrierten, Schaltung enthält. In diesem Fall ist die Recheneinheit insbesondere als ASIC (application specific integrated circuit) ausgebildet und umfasst einen frei programmierbare Speicherbereich, in den die Modellparameter für den anzusteuernden Stellantrieb geschrieben werden können.

Vorteilhaft ist es, wenn an der Antriebsschnittstelle ein als fluidischer Aktor ausgebildeter Stellantrieb angeschlossen ist und dass die Endstufenanordnung als Ventilanordnung für eine Bereitstellung eines fluidischen Energieflusses an den Stellantrieb ausgebildet ist.

Zweckmäßig ist es, wenn an der Antriebsschnittstelle ein als elektrischer Aktor ausgebildeter Stellantrieb angeschlossen ist und dass die Endstufenanordnung als elektronische Schalteranordnung für eine Bereitstellung eines elektrischen Energieflusses an den Stellantrieb ausgebildet ist.

Vorteilhaft ist es, der Stellantrieb mit einem Fluidventil bewegungsgekoppelt ist und wenn in einem inversen Modell der Regelstrecke mehrere Modellparameter des Fluidventils aus der Gruppe: Fluidmassenstrom, Fluiddruck, Ventilkörper-Rückstellkraft, aufgenommen sind.

Eine vorteilhafte Ausführungsform der Erfindung ist in der Zeichnung dargestellt. Hierbei zeigt:
- Figur 1: eine schematische Darstellung eines Prozessventils, das eine Bewegungssteuerung, einen fluidischen Stellantrieb und eine Ventileinrichtung umfasst,
- Figur 2: eine schematische Blockdarstellung für die Funktionen der Bewegungssteuerung, und
- Figur 3: ein stark vereinfachtes Ablaufdiagramm für die Verarbeitung von Sollwerten in der Bewegungssteuerung.

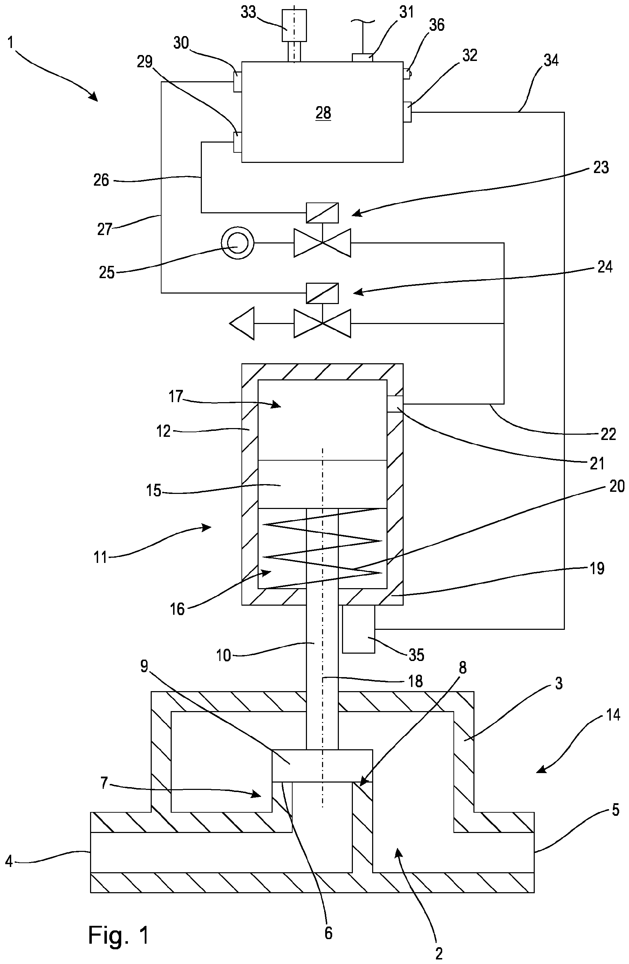

Ein in der Figur 1 schematisch dargestelltes Prozessventil 1 bis zur Beeinflussung eines Fluidstroms eines nicht näher dargestellten Prozessfluids in einem Fluidkanal 2 ausgebildet. Exemplarisch wird der Fluidkanal 2 von einem Ventilgehäuse 3 begrenzt, das einen Eingangsanschluss 4 und einen Ausgangsanschluss 5 sowie einen Ventilsitz 6 aufweist. Der Ventilsitz 6 ist als Mündungsöffnung eines rohrförmigen Abschnitts 7 des Fluidkanals 2 ausgebildet und weist eine kreisringförmige Stirnfläche 8 auf. An dem Ventilsitz 6 liegt ein Ventilkörper 9 abdichtend an, der mit einer Betätigungsstange 10 gekoppelt ist, die ihrerseits mit einem Stellantrieb 11 verbunden ist. Dabei bilden der Ventilkörper 9 und das Ventilgehäuse 3 mit den darin ausgebildeten Ventilsitz 6 und dem Eingangsanschluss 4 sowie dem Ausgangsanschluss 5 ein Ventil 14.

Bei dem Stellantrieb 11 handelt es sich um einen einfachwirkenden, federvorgespannten Fluidzylinder, der ein Zylindergehäuse 12 und einen schiebebeweglich und abdichtend im Zylindergehäuse 12 aufgenommenen Arbeitskolben 15 umfasst. Dabei bilden der Arbeitskolben 15 und eine Ausnehmung 16 im Zylindergehäuse 12 einen fluidischen Arbeitsraums 17, der zur Durchführung einer Linearbewegung des Arbeitskolben 15 längs einer Bewegungsachse 18 mit einem druckbeaufschlagten Fluid befüllt werden kann.

Wie aus der Darstellung der Figur 1 entnommen werden kann, befindet sich der Arbeitskolben 15 in einer ersten Funktionsstellung, in der der Ventilkörper 9 abdichtend an Ventilsitz 6 anliegt. Ferner ist in dieser Funktionsstellung eine zwischen dem Arbeitskolben 15 und einem Endbereich 19 des Zylindergehäuses 12 angeordnete Rückstellfeder 20 deformiert und hat dadurch Bewegungsenergie gespeichert. Bei einer Reduzierung des im Arbeitsraum 17 vorherrschenden Fluidrucks ermöglicht die Rückstellfeder 20 eine Öffnungsbewegung für den Ventilkörper 9, wodurch dieser vom Ventilsitz 6 abgehoben wird und einen fluidisch kommunizierenden Querschnitt zwischen dem Eingangsanschluss 4 und dem Ausgangsanschluss 5 freigibt. Hierdurch kann ein Prozessfluid zwischen dem Eingangsanschluss 4 und dem Ausgangsanschluss 5 strömen.

Um eine Bereitstellung von druckbeaufschlagte Fluid an den Arbeitsraums 17 zu ermöglichen weist das Zylindergehäuse 12 eine Anschlussöffnung 21 auf, an der eine Fluidleitung 22 angeschlossen ist. Die Fluidleitung 22 ist sowohl mit einem Zufuhrventil 23 als auch mit einem Ablassventil 24 verbunden. Dabei ist das Zufuhrventil 23 für eine Einstellung eines Fluidstroms von einer Fluidquelle 25 an den Arbeitsraum 17 vorgesehen, während das Ablassventil 24 für eine Fluidabfuhr aus dem Arbeitsraum 17 ausgebildet ist. Exemplarisch ist vorgesehen, dass das Zufuhrventil 23 und das Ablassventil 24 als elektrisch ansteuerbare Proportionalventile ausgebildet sind.

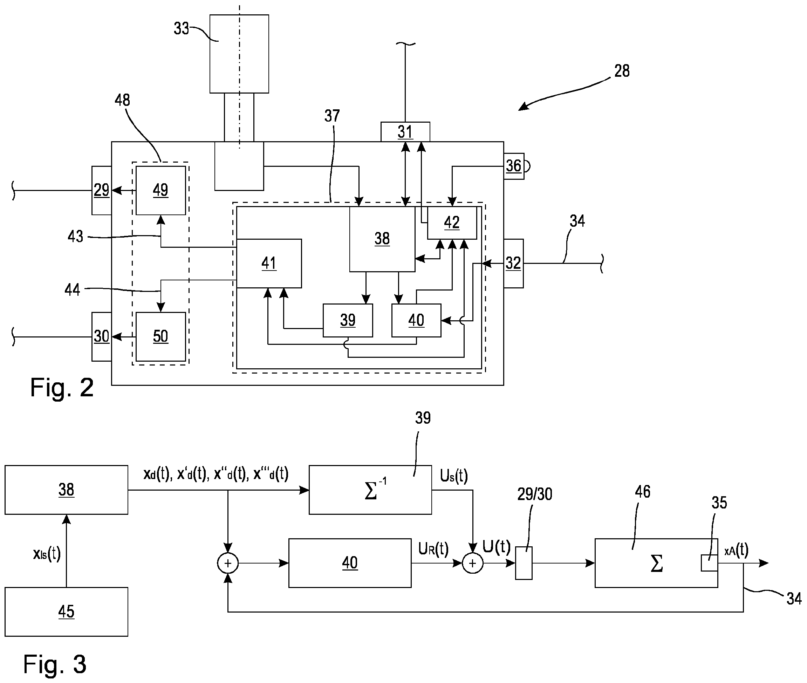

Dementsprechend sind das Zufuhrventil 23 und das Ablassventil 24 über Steuerleitungen 26, 27 elektrisch mit Antriebsschnittstellen 29, 30 einer Bewegungssteuerung 28 verbunden, deren Funktionsweise im Zusammenhang mit den Figuren 2 und 3 näher beschrieben wird.

Wie aus der Darstellung der Figur 1 weiter entnommen werden kann, weist die Bewegungssteuerung 28 ferner eine Steuerungsschnittstelle 31, eine Sensorschnittstelle 32 und exemplarisch ein Eingabemittel 33 auf. Bei dem Eingabemittel handelt es sich exemplarisch um einen Drehknopf, mit dessen Hilfe ein nicht dargestelltes Potentiometer bewegt werden kann, um in manueller Weise einen Sollwert an die Bewegungssteuerung 28 bereitzustellen. Die Steuerungsschnittstelle 31 ist für eine Kommunikation mit einer nicht dargestellten, übergeordneten Steuerungseinrichtung, vorzugsweise über einen Kommunikationsbus, insbesondere einer speicherprogrammierbaren Steuerung (SPS) ausgebildet. Die Sensorschnittstelle 32 steht über eine Sensorleitung 34 in elektrische Verbindung mit einem Positionssensor 35, der exemplarisch an einem stirnseitigen Endbereich 19 des Sensorgehäuses 12 benachbart zur Betätigungsstange 10 angeordnet ist. Die Aufgabe des Positionssensors 35 besteht darin, ein von der Stellung der Betätigungstange 10 längs der Bewegungsachse 18 abhängiges Sensorsignal an die Bewegungssteuerung 28 bereitzustellen. Rein exemplarisch ist an der Bewegungssteuerung 28 eine beispielhaft als Leuchtdiode ausgebildete Signaleinrichtung 36 angebracht, deren Funktion ebenfalls im Zusammenhang mit der Figur 2 näher erläutert wird.

Wie aus der schematischen Blockdarstellung der Figur 2 entnommen werden kann, umfasst die Bewegungssteuerung 28 mehrere Funktionskomponenten, die insbesondere als Recheneinheit 37 und als Endstufenanordnung 48 ausgebildet sind. Die Recheneinheit 37 ist rein schematisch in verschiedene Funktionsblöcke aufgeteilt, die für einen teilweise unidirektionalen und teilweise bidirektionalen Datenaustausch ausgebildet sind und nachstehend näher erläutert werden. Bei der Endstufenanordnung 48 handelt es sich exemplarisch um elektronische Schalteinrichtungen 49, 50, insbesondere Feldeffekttransistoren, die mit Hilfe von Steuersignalen der Recheneinheit 37 angesteuert werden können, um eine Bereitstellung elektrischer Energie an den Antriebsschnittstellen 29, 30 und damit eine Öffnungs-oder Schließbewegung der zugeordneten Ventile (Zufuhrventil 23, Ablassventil 24) zu ermöglichen.

Die nachstehende Beschreibung der Funktionsblöcke in der Recheneinheit 37 ist sowohl für eine Ausgestaltung dieser Funktionsblöcke als diskrete oder integrierte Schaltungsbestandteile der Recheneinheit 37 als auch als Softwaremodule, die auf der Recheneinheit 37 lauffähig sind, gültig.

Rein exemplarisch ist vorgesehen, dass die Recheneinheit 37 eine Bahnplanungseinheit 38, ein Steuermittel 39, ein Regelmittel 40, eine Steuereinheit 41 sowie ein Überwachungsmittel 42 umfasst.

Dabei besteht die Aufgabe der Bahnplanungseinheit 38 in eine Bereitstellung wenigstens eines Bewegungswerts an das Steuermittel 39 und an das Regelmittel 40 in Abhängigkeit von einer Sollposition, die wahlweise von einer übergeordneten Steuerungseinrichtung an der Steuerungsschnittstelle 31 oder vom Eingabemittel 33, bei dem es sich exemplarisch um ein Drehpotentiometer handelt, bereitgestellt wird. In der Bahnplanungseinheit 38 erfolgt eine Berechnung des wenigstens einen Bewegungswerts aus der Sollposition. Vorzugsweise ist vorgesehen, dass die Bahnplanungseinheit 38 eine Zielposition und/oder eine Zielgeschwindigkeit und/oder eine Zielbeschleunigung und/oder einen Zielruck für die Bewegung des Stellantriebs 11 bereitstellt. Exemplarisch wird davon ausgegangen, dass die Bahnplanungseinheit 38 keine Kenntnis von der tatsächlichen Stellung des Stellantriebs 11 und der damit gekoppelten Komponente, bei der es sich gemäß der Figur 1 beispielsweise um die Betätigungsstange 10 und den daran angebrachten Ventilkörper 9 handeln kann, hat. Vielmehr besteht die Aufgabe der Bahnplanungseinheit 38 darin, die bereitgestellte Sollposition auf Plausibilität zu überprüfen und eventuell vorhandene Einschränkungen hinsichtlich der Bewegung des Stellantriebs 11 und der damit gekoppelten Komponente zu berücksichtigen und in Abhängigkeit von diesen Beschränkungen die erforderlichen Bewegungswerte auszugeben.

Diese Bewegungswerte werden in dem Steuermittel 39 und in dem Regelmittel 40 verarbeitet und resultieren in Stellwertsignalen, die von der Steuereinheit 41 empfangen und zusammengeführt werden und dort in geeignete Steuersignale 43, 44 für die elektrischen Schalteinrichtungen 49, 50 der Endstufenanordnung 48 umgesetzt werden. Anhand der an Steuersignale 43, 44 erfolgt dann in den Schalteinrichtungen 49, 50 eine entsprechende Freigabe elektrischer Leistung an die Antriebsschnittstelle 29, 30, so dass die jeweils angeschlossenen Ventile (Zufuhrventil 23, Ablassventil 24) jeweils eine gewünschte Funktionsstellung einnehmen können.

Ferner umfasst die Recheneinheit 37 das Überwachungsmittel 42, das vorzugsweise in gleicher Weise wie die Steuereinheit 41 für den Empfang der jeweiligen Stellwertsignale vom Steuermittel 39 und vom Regelmittel 40 ausgebildet ist und das für eine Bewertung der bereitgestellten Stellgrößenanteile ausgebildet ist, um eine Unterscheidung zwischen einer ordnungsgemäßen Funktion des angeschlossenen Stellantriebs 11 und einer fehlerbehafteten Funktion des angeschlossenen Stellantriebs 11 ermöglichen. Hierzu wird insbesondere der Stellgrößenanteil des Steuermittels 39 in Beziehung mit dem Stellgrößenanteil des Regelmittels 40 gesetzt, um anhand des ermittelten Verhältnisses der Stellgrößenanteile die gewünschte Diagnosefunktion durchführen zu können. Dabei besteht die Erwartungshaltung darin, dass der Stellgrößenanteil des Steuermittels 39 erheblich größer als der Stellgrößenanteil des Regelmittels 40 ist. Sofern dies der Fall ist, wird von einer ordnungsgemäßen Funktion des Stellantriebs ausgegangen. Wird jedoch vom Überwachungsmittel 42 festgestellt, dass der Stellgrößenanteil des Regelmittels 40, insbesondere länger als einen vorgebbaren Zeitraum, oberhalb eines vorgebbaren Schwellwerts liegt, so ist das Überwachungsmittel 42 dazu ausgebildet, ein Fehlersignal auszugeben, das wahlweise oder kumulativ an die Steuerungsschnittstelle 31 und/oder die Signaleinrichtung 36 bereitgestellt werden kann, um einen Fehler im Stellantrieb 11 oder der zugeordneten Komponente, insbesondere des Ventils 14 zu signalisieren.

In der Figur 3 ist eine stark abstrahierte Darstellung des Berechnungsvorgangs für die Ermittlung des wenigstens einen Steuersignals 43, 44 gezeigt, wobei die Figur 3 lediglich eine andere Art der grafischen Darstellung der in den Figuren 1 und 2 dargestellten Komponenten ist, so dass die gleichen Bezugszeichen Verwendung finden. Für den Berechnungsvorgang wird davon ausgegangen, dass eine Sollposition für den Stellantrieb 11 in Form eines zeitabhängigen Positionswerts Xₗₛ(t) von der übergeordneten Steuerungseinrichtung 45 über die nicht näher dargestellte Steuerungsschnittstelle 31 an die auch als Trajektoriengenerator bezeichnete Bahnplanungseinheit 38 bereitgestellt wird. In der Bahnplanungseinheit 38 erfolgt die Berechnung mehrerer Bewegungswerte in Abhängigkeit von der bereitgestellten Sollposition Xₗₛ(t). Exemplarisch umfassen die Bewegungswerte eine Zielposition x_{d}(t) sowie eine erste Ableitung x'_{d}(t) der Zielposition (Zielgeschwindigkeit), eine zweite Ableitung der Zielposition x"_{d}(t) (Zielbeschleunigung) und eine dritte Ableitung der Zielposition x"'_{d}(t) (Zielruck). Diese Bewegungswerte werden dem Steuermittel 39 und dem Regelmittel 40 zugeführt, bevor sie dem Regelmittel 40 zur Verfügung gestellt werden. Das Steuermittel 39 umfasst ein inverses Modell ∑⁻¹ der Regelstrecke, so dass eine Eingabe der Bewegungswerte in das Steuermittel 39 zur Ausgabe einer erste Stellgröße Uₛ(t) führt, die auch als erster Stellgrößenanteil bezeichnet werden kann. Exemplarisch ist das Regelmittel 40 als PI-Regler ausgebildet und gibt eine zweite Stellgröße UR(t) die auch als zweiter Stellgrößenanteil bezeichnet werden kann, aus. Die beiden Stellgrößenanteile werden in der Steuereinheit 41 als Stellgröße U(t) zusammengeführt und anschließend der zu regelnden Strecke 46 (∑) zugeführt, die mit dem Positionssensor 35 ausgerüstet ist, dessen Signal über die Sensorleitung 34 dem Regelmittel 40 zugeführt wird.

## Patentansprüche

1. Verfahren zum Betreiben eines elektrischen oder fluidischen Stellantriebs (11), dem eine Sollposition, insbesondere von einer übergeordneten Steuerungseinrichtung (45), vorgegeben wird, mit den Schritten: Bereitstellen der Sollposition, insbesondere von einer übergeordneten Steuerungseinrichtung (45), an eine Bahnplanungseinheit (38) und Berechnen von Bewegungswerten (x_{d}(t), x'_{d}(t), x"_{d}(t), x'"_{d}(t)) aus der Sollposition, Bereitstellen der Bewegungswerte (x_{d}(t), x'_{d}(t), x"_{d}(t), x"'_{d}(t)) von der Bahnplanungseinheit (38) an ein Steuermittel (39) und an ein Regelmittel (40), Berechnen eines von den Bewegungswerten x_{d}(t), x'_{d}(t), x''_{d}(t), x'"_{d}(t)) abhängigen ersten Stellgrößenanteils im Steuermittel (39) und Berechnen eines von den Bewegungswerten (x_{d}(t), x'_{d}(t), x"_{d}(t), x"'_{d}(t)) und von Positionssignalen eines dem Stellantrieb (11) zugeordneten Positionssensors (35) abhängigen zweiten Stellgrößenanteils im Regelmittel (40), Zusammenführen des ersten und des zweiten Stellgrößenanteils in einer Steuereinheit (41) und Bereitstellen eines aus den Stellgrößenanteilen resultierenden Steuersignals (43, 44) an den Stellantrieb (11), **dadurch gekennzeichnet, dass** ein Überwachungsmittel (42) eine Überwachung wenigstens eines Stellgrößenanteils vornimmt und ein Fehlersignal bereitstellt, wenn der überwachte Stellgrößenanteil einen vorgebbaren Schwellenanteil am Steuersignal überschreitet.

2. Verfahren nach Anspruch 1, **dadurch gekennzeichnet, dass** in der Bahnplanungseinheit (38) eine Überprüfung der bereitgestellten Sollposition auf Konflikte mit vorgebbaren Bewegungsbeschränkungen und/oder Stellgrößenbeschränkungen vorgenommen wird, bevor die Berechnung der Bewegungswerte (x_{d}(t), x'_{d}(t), x''_{d}(t), x"'_{d}(t)) erfolgt.

3. Verfahren nach Anspruch 1 oder 2, **dadurch gekennzeichnet, dass** in dem Steuermittel (39) eine Berechnung des ersten Stellgrößenanteils mit einem inversen Modell (39) der Regelstrecke vorgenommen wird.

4. Verfahren nach Anspruch 3, **dadurch gekennzeichnet, dass** in dem inversen Modell (39) der Regelstrecke mehrere Modellparameter eines mit dem Stellantrieb (11) bewegungsgekoppelten Fluidventils (14) aus der Gruppe: Fluidmassenstrom, Fluiddruck, Ventilkörper-Rückstellkraft, berücksichtigt werden.

5. Verfahren nach Anspruch 3, 4 oder 5, **dadurch gekennzeichnet, dass** im Regelmittel (40) zusätzlich zur Berechnung des zweiten Stellgrößenanteils eine Berechnung eines Reglerfehlerwerts mit einem Fehlermodell vorgenommen wird und/oder dass in dem Steuermittel (39) zusätzlich zur Berechnung des ersten Stellgrößenanteils mit dem inversen Modell (39) der Regelstrecke eine Berechnung eines Steuerfehlerwerts mit einem inversen Fehlermodell vorgenommen wird.

6. Verfahren nach einem der vorhergehenden Ansprüche, **dadurch gekennzeichnet, dass** das Überwachungsmittel (42) eine Überwachung des zweiten Stellgrößenanteils vornimmt und dass das Überwachungsmittel das Fehlersignal bereitstellt, wenn die Überschreitung des vorgebbaren Schwellenanteils am Steuersignal durch den zweiten Stellgrößenanteil länger als eine vorgebbare Zeitspanne andauert oder ein Integral über dem zweiten Stellgrößenanteil einen vorgebbaren Wert überschreitet.

7. Verfahren nach einem der vorhergehenden Ansprüche, **dadurch gekennzeichnet, dass** das Steuermittel (39) den ersten Stellgrößenanteil mit einer flachheitsbasierten Vorsteuerung berechnet und dass das Regelmittel (40) anhand des Sensorsignals eine Anpassung des Steuersignals an die bereitgestellten Bewegungswerte (x_{d}(t), x'_{d}(t), x"_{d}(t), x"'_{d}(t)) mit dem zweiten Stellgrößenanteil durchführt.

8. Verfahren nach einem der vorhergehenden Ansprüche, **dadurch gekennzeichnet, dass** auch bei Vorliegen einer Überschreitung des vorgebbaren Schwellenanteils am Steuersignal durch den zweiten Stellgrößenanteil, insbesondere länger als eine vorgebbare Zeitspanne oder bei Überschreitung eines vorgebbaren Integralwerts, eine fortdauernde Ansteuerung des Stellantriebs (11) durchgeführt wird.

9. Bewegungssteuerung für einen Stellantrieb (11), mit einer Eingangsschnittstelle (31, 33), die für einen Empfang einer Sollposition, insbesondere von einer übergeordneten Steuerungseinrichtung (45), ausgebildet ist, mit einer Antriebsschnittstelle (29, 30, 32), die für eine Bereitstellung eines Energieflusses an einen Stellantrieb (11) und für einen Empfang eines dem Stellantrieb (11) zugeordneten Positionssensors (35) ausgebildet ist, mit einer Recheneinheit (37), die für eine Verarbeitung der Sollposition in ein Steuersignal ausgebildet ist und mit einer Endstufenanordnung (48), die für eine Bereitstellung des Energieflusses an die Antriebsschnittstelle (29, 30) in Abhängigkeit von dem Steuersignal ausgebildet ist, **dadurch gekennzeichnet, dass** die Recheneinheit (37) für die Durchführung des Verfahrens nach einem der vorhergehenden Ansprüche eingerichtet ist.

10. Bewegungssteuerung nach Anspruch 9, **dadurch gekennzeichnet, dass** die Recheneinheit (37) die Bahnplanungseinheit (38), das Steuermittel (39), das Regelmittel (40), das Überwachungsmittel (42) und die Steuereinheit (41) als Softwaremodule enthält.

11. Bewegungssteuerung nach Anspruch 9, **dadurch gekennzeichnet, dass** die Recheneinheit (37) die Bahnplanungseinheit (38), das Steuermittel (39), das Regelmittel (40), das Überwachungsmittel (42) und die Steuereinheit (41) als Bestandteile einer elektronischen, insbesondere integrierten, Schaltung enthält.

12. Bewegungssteuerung nach Anspruch 9, 10 oder 11, **dadurch gekennzeichnet, dass** an der Antriebsschnittstelle (29, 30) ein als fluidischer Aktor ausgebildeter Stellantrieb (11) angeschlossen ist und dass die Endstufenanordnung als Ventilanordnung (23, 24) für eine Bereitstellung eines fluidischen Energieflusses an den Stellantrieb (11) ausgebildet ist.

13. Bewegungssteuerung nach Anspruch 9, 10 oder 11, **dadurch gekennzeichnet, dass** an der Antriebsschnittstelle ein als elektrischer Aktor ausgebildeter Stellantrieb angeschlossen ist und dass die Endstufenanordnung als elektronische Schalteranordnung für eine Bereitstellung eines elektrischen Energieflusses an den Stellantrieb ausgebildet ist.

14. Bewegungssteuerung nach Anspruch 12 oder 13, **dadurch gekennzeichnet, dass** der Stellantrieb (11) mit einem Fluidventil (14) bewegungsgekoppelt ist und dass in einem inversen Modell (39) der Regelstrecke mehrere Modellparameter des Fluidventils aus der Gruppe: Fluidmassenstrom, Fluiddruck, Ventilkörper-Rückstellkraft, aufgenommen sind.

## Claims

1. Method for operating an electric or fluidic actuator (11), for which a setpoint position is predefined, in particular by a higher-level control device (45), comprising the steps: provision of the setpoint position, in particular by a higher-level control device (45), to a path planning unit (38) and calculation of movement values (xd(t), x'd(t), x''d(t), x'''d(t))from the setpoint position, provision of the movement values (xd(t), x'd(t), x''d(t), x'''d(t)) by the path planning unit (38) to an open-loop control means (39) and a closed-loop control means (40), calculation of a first manipulated variable component dependent on the movement values (xd(t), x'd(t), x''d(t), x'''d(t)) in the open-loop control means and calculation of a second manipulated variable component dependent on the movement values (xd(t), x'd(t), x''d(t), x'''d(t)) and on position signals of a position sensor (35) assigned to the actuator (11) in the closed-loop control means (40), combining of the first and the second manipulated variable component in an control unit (41) and provision of a control signal (43, 44) resulting from the manipulated variable components to the actuator (11), **characterised in that** a monitoring means (42) performs a monitoring of at least one manipulated variable component and provides a fault signal if the monitored manipulated variable component exceeds a predefinable threshold component at the control signal.

2. Method according to claim 1, **characterised in that** in the path planning unit (38) a check is performed of the setpoint position provided for conflicts with predefinable movement restrictions and/or manipulated variable restrictions, before calculation of the movement values (xd(t), x'd(t), x''d(t), x'''d(t)) takes place.

3. Method according to claim 1 or 2, **characterised in that** in the open-loop control means (39) a calculation of the first manipulated variable component is performed with an inverse model (39) of the control path.

4. Method according to claim 3, **characterised in that** in the inverse model (39) of the control path a number of model parameters of a fluid valve (14) movably coupled with the actuator, from the group: fluid mass flow, fluid pressure, or valve body restoring force, are taken into account.

5. Method according to claim 3, 4 or 5, **characterised in that** in the closed-loop control means (40) in addition to the calculation of the second manipulated variable component, a calculation is performed with a fault model and/or that in the open-loop control means (39), in addition to the calculation of the first manipulated variable component with the inverse model (39) of the control path, a calculation of a control fault value is performed with an inverse fault model.

6. Method according to any one of the preceding claims, **characterised in that** the monitoring means (42) perform a monitoring of the second manipulated variable component and **in that** the monitoring means provides the fault signal if the exceeding of the predefinable threshold component at the control signal by the second manipulated variable component lasts for longer than a predefinable timespan or an integral of the second manipulated variable component exceeds a predefinable value.

7. Method according to any one of the preceding claims, **characterised in that** the open-loop control means (39) calculates the first manipulated variable component with flatness-based pilot control and **in that** that the closed-loop control means (40) on the basis of the sensor signal performs an adaptation of the control signal to the movement values (xd(t), x'd(t), x''d(t), x'''d(t)) provided with the second manipulated variable component (40).

8. Method according to any one of the preceding claims, **characterised in that** in the event also of exceeding a predefinable threshold component at the control signal by the second manipulated variable component, in particular for longer than a predefinable timespan or exceeding a predefinable integral value, continued driving of the actuator (11) is performed.

9. Movement controller for an actuator (11), comprising an input interface (31, 33), configured to receive a setpoint position, in particular from a higher-level control device (45), with a drive interface (29, 30, 32), configured to provide a power flow to an actuator (11) and for receipt by a position sensor (35) associated with the actuator (11), with a computing unit (37), configured to process the setpoint position in a control signal and with a power amplifier arrangement (48), configured to provide the power flow to the drive interface (29, 30) as a function of the control signal, **characterised in that** the computing unit (37) is configured to carry out the method of one of the above claims.

10. Movement controller according to claim 9, **characterised in that** the computing unit (37) contains the path planning unit (38), the open-loop control means (39), the closed-loop control means (40), the monitoring means (42) and the open-loop control unit (41) as software modules.

11. Movement controller according to claim 9, **characterised in that** the computing unit (37) contains the path planning unit (38), the open-loop control means (39) contains the closed-loop control means (40), the monitoring means (42) and the open-loop control unit (41) as components of an electronic, in particular integrated, circuit.

12. Movement controller according to claim 9, 10 or 11, **characterised in that** an actuator (11) configured as a fluidic actuator is connected to the drive interface (29, 30) and that the power amplifier arrangement is configured as a valve arrangement (23, 24) for provision of a fluidic power flow to the actuator (11).

13. Movement controller according to claim 9, 10 or 11, **characterised in that** an actuator configured as an electric actuator is connected to the drive interface and that the power amplifier arrangement is configured as an electronic switch arrangement for providing an electric power flow to the actuator.

14. Movement controller according to claim 12 or 13, **characterised in that** the actuator (11) actuator is movably coupled with a fluid valve (14) and **in that** in an inverse model (39) the control path includes a plurality of model parameters of the fluid valve from the group: fluid mass flow, fluid pressure, and valve body restoring force.

## Revendications

1. Procédé de fonctionnement d'un mécanisme de commande (11) électrique ou fluidique, auquel une position de consigne, en particulier par un dispositif de commande (45) supérieur est prescrite, avec les étapes : de fourniture de la position de consigne, en particulier par un dispositif de commande (45) supérieur, à une unité de planification de voie (38) et de calcul de valeurs de déplacement (x_{d}(t), x'_{d}(t), x"_{d}(t), x"'_{d}(t)) à partir de la position de consigne, de fourniture des valeurs de déplacement (x_{d}(t), x'_{d}(t), x"_{d}(t), x"'_{d}(t)) par l'unité de planification de voie (38) à un moyen de commande (39) et à un moyen de régulation (40), de calcul d'une première part de grandeur de réglage dépendant des valeurs de déplacement (x_{d}(t), x'_{d}(t), x"_{d}(t), x'"_{d}(t)) dans le moyen de commande (39) et de calcul d'une seconde part de grandeur de réglage dépendant des valeurs de déplacement (x_{d}(t), x'_{d}(t), x"_{d}(t), x'"_{d}(t)) et de signaux de position d'un capteur de position (35) associé au mécanisme de commande (11) dans le moyen de régulation (40), de réunion de la première et de la seconde part de grandeur de réglage dans une unité de commande (41) et de fourniture d'un signal de commande (43, 44) résultant des parts de grandeur de réglage au mécanisme de commande (11), **caractérisé en ce qu'**un moyen de surveillance (42) entreprend une surveillance d'au moins une part de grandeur de réglage et fournit un signal d'erreur, lorsque la part de grandeur de réglage surveillée dépasse une part seuil prescriptible au niveau du signal de commande.

2. Procédé selon la revendication 1, **caractérisé en ce que** dans l'unité de planification de voie (38) une vérification des conflits de la position de consigne fournie avec des limitations de déplacement prescriptibles et/ou des limitations de grandeur de réglage est entreprise avant que le calcul des valeurs de déplacement (x_{d}(t), x'_{d}(t), x"_{d}(t), x'"_{d}(t)) ne soit effectué.

3. Procédé selon la revendication 1 ou 2, **caractérisé en ce qu'**un calcul de la première part de grandeur de réglage est entrepris dans le moyen de commande (39) avec un modèle inverse (39) du système réglé.

4. Procédé selon la revendication 3, **caractérisé en ce que** dans le modèle inverse (39) du système réglé plusieurs paramètres de modèle d'une soupape de fluide (14) couplée en mouvement au mécanisme de commande (11) sont pris en considération à partir du groupe: courant de masse fluidique, pression fluidique, force de rappel de corps de soupape.

5. Procédé selon la revendication 3, 4 ou 5, **caractérisé en ce que** dans le moyen de réglage (40), outre le calcul de la seconde part de grandeur de réglage, un calcul d'une valeur d'erreur de régulateur avec un modèle d'erreur est entrepris et/ou que dans le moyen de commande (39), outre le calcul de la première part de grandeur de réglage avec le modèle inverse (39) du système réglé, un calcul d'une valeur d'erreur de commande avec un modèle d'erreur inverse est entrepris.

6. Procédé selon l'une des revendications précédentes, **caractérisé en ce que** le moyen de surveillance (42) entreprend une surveillance de la seconde part de grandeur de réglage et que le moyen de surveillance fournit le signal d'erreur lorsque le dépassement de la part seuil prescriptible au niveau du signal de commande par la seconde part de grandeur de réglage dure plus longtemps qu'un intervalle prescriptible ou une intégrale sur la seconde part de grandeur de réglage dépasse une valeur prescriptible.

7. Procédé selon l'une des revendications précédentes, **caractérisé en ce que** le moyen de commande (39) calcule la première part de grandeur de réglage avec une précommande basée sur l'aplatissement et que le moyen de régulation (40) réalise à l'aide du signal de capteur une adaptation du signal de commande aux valeurs de déplacement fournies (x_{d}(t), x'_{d}(t), x"_{d}(t), x'"_{d}(t)) avec la seconde part de grandeur de réglage.

8. Procédé selon l'une des revendications précédentes, **caractérisé en ce qu'**aussi en présence d'un dépassement de la part seuil prescriptible au niveau du signal de commande par la seconde part de grandeur de réglage, en particulier plus longtemps qu'un intervalle prescriptible ou en cas de dépassement d'une valeur intégrale prescriptible, une commande permanente du mécanisme de commande (11) est réalisée.

9. Commande de déplacement pour un mécanisme de commande (11), avec une interface d'entrée (31, 33) qui est réalisée pour une réception d'une position de consigne, en particulier d'un dispositif de commande (45) supérieur, avec une interface d'entraînement (29, 30, 32) qui est réalisée pour une fourniture d'un flux d'énergie à un mécanisme de commande (11) et pour une réception d'un capteur de position (35) associé au mécanisme de commande (11), avec une unité de calcul (37) qui est réalisée pour un traitement de la position de consigne dans un signal de commande et avec un agencement d'étages terminaux (48) qui est réalisé pour une fourniture du flux d'énergie à l'interface d'entraînement (29, 30) en fonction du signal de commande, **caractérisée en ce que** l'unité de calcul (37) est conçue pour la réalisation du procédé selon l'une des revendications précédentes.

10. Commande de déplacement selon la revendication 9, **caractérisée en ce que** l'unité de calcul (37) contient l'unité de planification de voie (38), le moyen de commande (39), le moyen de régulation (40), le moyen de surveillance (42) et l'unité de commande (41) en tant que module logiciel.

11. Commande de déplacement selon la revendication 9, **caractérisée en ce que** l'unité de calcul (37) contient l'unité de planification de voie (38), le moyen de commande (39), le moyen de régulation (40), le moyen de surveillance (42) et l'unité de commande (41) en tant que constituants d'un circuit électronique, en particulier intégré.

12. Commande de déplacement selon la revendication 9, 10 ou 11, **caractérisée en ce qu'**un mécanisme de commande (11) réalisé en tant qu'actionneur fluidique est raccordé à l'interface d'entraînement (29, 30) et que l'agencement d'étages terminaux est réalisé en tant qu'agencement de soupape (23, 24) pour une fourniture d'un flux d'énergie fluidique au mécanisme de commande (11).

13. Commande de déplacement selon la revendication 9, 10 ou 11, **caractérisée en ce qu'**un mécanisme de commande réalisé en tant qu'actionneur électrique est raccordé à l'interface d'entraînement et que l'agencement d'étages terminaux est réalisé en tant qu'agencement de commutateur électronique pour une fourniture d'un flux d'énergie électrique au mécanisme de commande.

14. Commande de déplacement selon la revendication 12 ou 13, **caractérisé en ce que** le mécanisme de commande (11) est couplé en mouvement à une soupape de fluide (14) et que dans un modèle inverse (39) du système réglé, plusieurs paramètres de modèle de la soupape de fluide sont enregistrés à partir du groupe : courant massique de fluide, pression fluidique, force de rappel de corps de soupape.
